# EUROPÄISCHE PATENTSCHRIFT

(11) **EP 0 312 891 B1**
(45) Veröffentlichungstag und Bekanntmachung des Hinweises auf die Patenterteilung: **10.02.1993**
(21) Anmeldenummer: 88116858.7
(22) Anmeldetag: 11.10.1988
(51) Int. Cl.: G11B 23/087

(54) **Magnetbandcassette**
Magnetic tape cassette
Cassette à bande magnétique

(30) Priorität: 22.10.1987 DE 3735671
(43) Veröffentlichungstag der Anmeldung: 26.04.1989
(73) Patentinhaber: BASF Magnetics GmbH, 68165 Mannheim (DE)
(72) Erfinder: Breuer, Rudolf, D-8000 München 21 (DE); Brunner, Hubert, D-8911 Weil (DE)
(74) Vertreter: Münch, Volker, Dr.

(56) Entgegenhaltungen:
- DE-A- 3 137 889
- FR-A- 2 134 823
- FR-A- 2 286 467
- PATENT ABSTRACTS OF JAPAN vol. 11, no. 42 (P-545)(2489) 06 Februar 1987, & JP-A-61 210579
- PATENT ABSTRACTS OF JAPAN vol. 10, no. 22 (P-424)(2079) 28 Januar 1986, & JP-A-60 173784

## Beschreibung

Die Erfindung betrifft eine Magnetbandcassette, insbesondere eine Magnetbandcassette mit Verschlußelementen für das Magnetband, durch welche die in der Stirnseite der Cassette gebildete Öffnung sowie die in der Cassettenunterseite gebildeten Ausschnittbereiche der Spulenwellen-Einführungsöffnungen wirksam verschlossen sind.

Cassetten dieser Art sind beispielsweise aus den DE-A-34 46 990, DE-A-35 07 991, DE-A-35 37 646, EP-A-0 160 822 und GB-A-2 165 819 bekannt. Eine derartige Magnetbandcassette ist in Figur 1 perspektivisch dargestellt. Die Cassette besteht aus einer oberen Gehäusehälfte (1), die eine Rückwand (2), zueinander parallel verlaufende Seitenwände (3) und eine rechteckige Deckplatte aufweist. In der Mitte der Deckplatte ist eine Fensteröffnung (4) vorgesehen, die in Längsrichtung verläuft. Durch diese kann der Wickelzustand des Magnetbandes beobachtet werden. Eine untere Gehäusehälfte (5) enthält im mittleren Teil der zugehörigen unteren Bodenplatte symmetrisch zueinander zwei Öffnungen (14), in die die Antriebswellen des Recorders für die Wickelnaben (6a, 6b) eingesetzt werden. Die Seitenwände und Rückwände der oberen und unteren Gehäusehälften sind in der Höhe im wesentlichen gleich. Werden die oberen und unteren Gehäusehälften aufeinander montiert, so bildet sich dazwischen ein Gehäuseraum. Die zum Aufwickeln und Abwickeln des Magnetbandes (7) dienenden Wickelnaben (6a, 6b) sind symmetrisch zueinander im mittleren Bereich dieses Gehäuseraumes angeordnet. An den oberen oder unteren Endbereichen der Wickelnaben sind Verzahnungen vorgesehen. Zu beiden Seiten der Spulen sind Gleitfolien (8a, 8b) angeordnet, damit ein leichtes Gleiten des Magnetbandes gewährleistet ist. Eine Spulenbremse (9), vorgespannt durch die Feder (18) greift in die Verzahnungen der Naben ein. Der nach der Montage zwischen den oberen und unteren Gehäusehälften gebildete offene Raum (10) wird durch eine Frontklappe (11) verschlossen, um das Eindringen von Staub in das Cassettengehäuse zu verhindern. In den offenen Raum tauchen nicht gezeichnete Antriebsmittel einer Bandantriebsvorrichtung ein. Die Frontklappe besteht aus einer länglichen Frontfläche mit einem leicht nach oben gebogenen Abschnitt und an beiden Enden angeordneten Seitenlaschen (12). Die Frontklappe ist an dem Cassettengehäuse durch von den Innenflächen der Seitenlaschen abstehende Lagerstifte (13) schwenkbar gelagert. Zum Abdecken des offenen Raumes der unteren Gehäusehälfte ist ein Schieber (15) vorgesehen, um das Eindringen von Staub durch die Öffnungen (14) zu verhindern. Der Schieber weist parallel zueinander verlaufende Seitenwände (16) gleicher Höhe auf sowie eine rechteckförmige Platte zur Verbindung der beiden Seitenwände. Im mittleren Bereich des Schiebers sind symmetrisch zueinander Öffnungen (17) vorgesehen, durch die die recorderseitigen Antriebswellen zu den Spulennaben durchgreifen können, wenn sich der Schieber bei Offenstellung der Magnetbandcassette in der hinteren Position befindet. Durch eine (nicht gezeichnete) Feder, deren abgebogenes Ende in dem Pfosten (23) an der unteren Gehäusehälfte befestigt ist und deren freies Ende am Vorsprung (19) am Schieber sitzt, wird dieser vorgespannt. Eine andere Ausführung, welche in der bereits genannten DE-OS 35 07 991 beschrieben ist, sieht zur Vorspannung des Schiebers eine Schraubenfeder vor, deren vorderer Teil sich an einem Vorsprung im Cassettenteil und deren hinterer Teil sich an einem Vorsprung des Schiebers abstützt und die in einem der unteren Gehäusehälfte vorgesehenen Schlitz geführt wird.

Die vorstehende Beschreibung verdeutlicht den komplizierten Aufbau der Cassette, der auch eine teure Montage bedingt. Deswegen bestand die Aufgabe, eine Cassette der eingangs genannten Art zu finden, die einfacher aufgebaut und zu montieren ist.

Die Aufgabe wurde gemäß der vorliegenden Erfindung mit einer Magnetbandcassette mit den in kennzeichnenden Teil der Ansprüche aufgeführten Merkmalen gelöst. Nähere Einzelheiten gehen aus der Beschreibung und den Zeichnungen hervor.

Die Erfindung wird nun anhand der Zeichnungen näher erläutert, und zwar zeigt
Figur 1 eine expolosionsartige Darstellung einer konventionellen Magnetbandcassette
Figur 2 eine Darstellung der erfindungsgemäßen Magnetbandcassette und zwar des Gehäuseunterteils und des Schiebers
Figur 3 eine Draufsicht auf eine Cassette gemäß Figur 2 mit den in den Eingriffsöffnungen ruhenden Wikkelnaben im geöffneten und geschlossenen Zustand der Cassette beziehungsweise des Schiebers
Figur 4 - 5 schematische Draufsichten auf den Federmechanismus des Schiebers

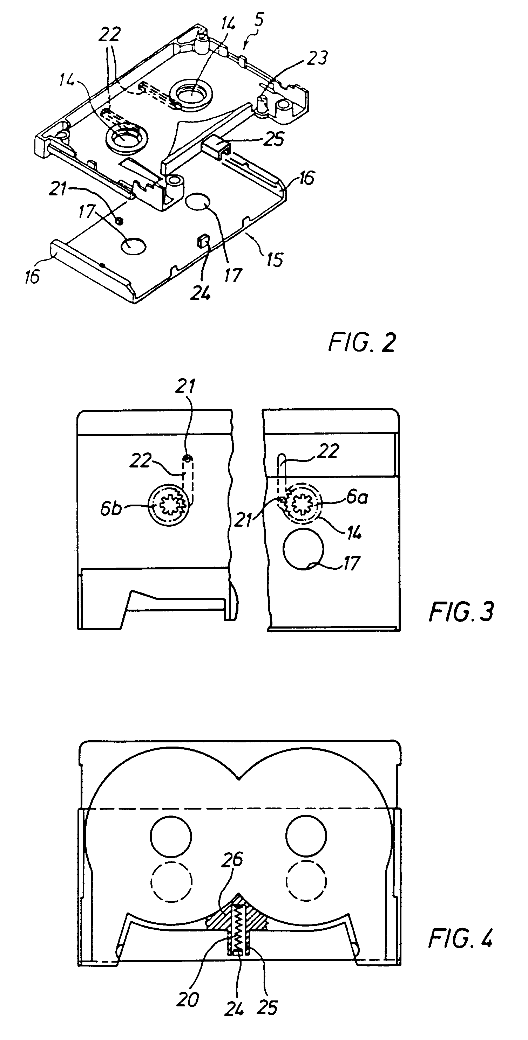

Die Figuren 2 und 3 zeigen den Aufbau der erfindungsgemäßen Magnetbandcassette und zwar die Änderungen im Cassettenunterteil (5) sowie im Schieber (15). Aus der Bodenplatte des Schiebers (15) ragen auf der dem Cassettenunterteil (5) zugekehrten Oberseite im hinteren Teil zwei Sperrnasen (21) heraus. Die Sperrnasen laufen in entsprechend angeordneten Führungsrillen (22), welche sich auf der Unterseite des Cassettenunterteils (5) befinden. Die Führungsrillen verlaufen dabei parallel zu den Seitenwänden (16) des Schiebers. Sie gehen von den Eintrittsöffnungen (14) aus und verlaufen bis zum hinteren Teil des Cassettenunterteils, wobei ihre Länge dem vollen Verschiebebereich des Schiebers entspricht.

Aus Abbildung 3 geht die Funktion der Sperrnasen hervor: im rechten Teil wird der geschlossene Cassettenzustand bei Nichtbenutzung dargestellt. Dabei befindet sich der Schieber in seiner vorderen Stellung, und die Sperrnasen greifen in die Zahnkränze der Wickelnaben (6a, 6b) ein. Bei Benutzung der Cassette im Recorder befindet sich der Schieber in seiner hinteren Stellung (Figur 3, linke Seite), wobei die Öffnungen (14, 17) des Cassettenunterteils beziehungsweise des Schiebers übereinander liegen und den Eintritt der recorderseitigen Antriebswellen ermöglichen. In diesem Zustand geben die Sperrnasen die Zahnkränze frei. Die Länge, die Form und die Position der Sperrnasen ist so beschaffen, daß je nach Anordnung der Führungsrillen (22) in Bezug auf die Lage der Eintrittsöffnungen (14) eine sichere und optimale Sperre beziehungsweise Freigabe der Wickelnaben erfolgt.

Die Vorspannung des Schiebers (15) geht aus den Figuren 2 und 4 hervor. Der Schieber (15) besitzt an seiner vorderen Oberseite in der Mitte eine Nase (24) die in eine nach unten sowie nach vorne offene Rille (25) an der Unterseite des Cassettenunterteils eingreift. In dieser Rille sitzt eine Schraubenfeder (20), die sich mit ihrem vorderen Ende an der Nase (24) mit dem hinteren Ende am Ende der Rille in der Wand (26) des Cassettenunterteils abstützt.

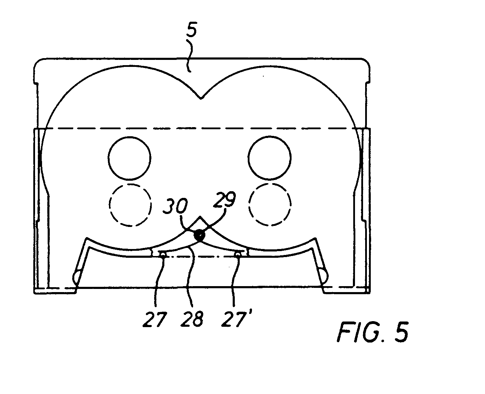

Eine andere Lösung, mit der die vorspannung des Schiebers bewirkt wird, geht aus der Figur 5 hervor. Eine zweischenkelige Feder (28) ruht mit ihrem mittleren gewendelten Teil (29) auf einem Pfosten (30) der an der Außenseite des Gassettenunterteils angespritzt ist, während die beiden Schenkel sich an Vorsprüngen (27, 27') abstützen, welche beiderseits der Mitte des vorderen Teils des Schiebers angespritzt sind

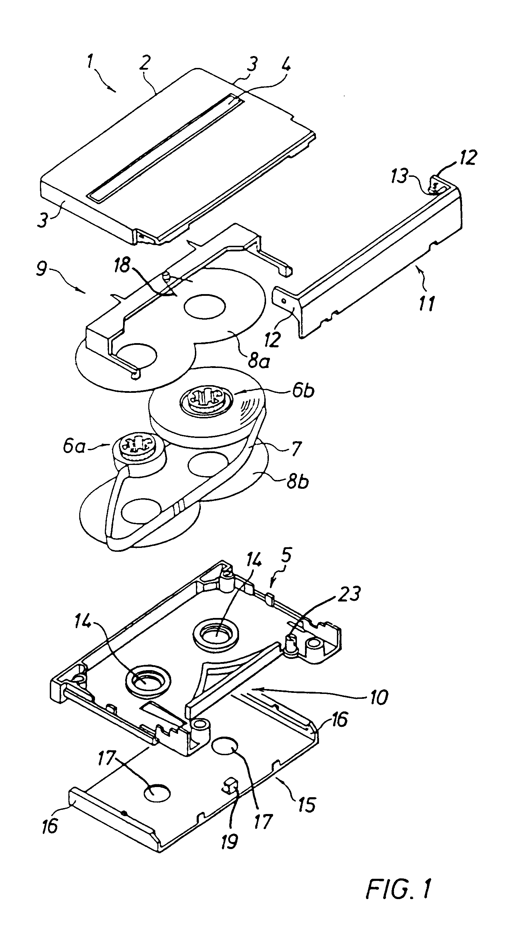

Mit der erfindungsgemäßen Magnetbandcassette wird die Spulenbremse (9) samt ihrer Feder (18) überflüssig (Figur 1), außerdem fällt der Pfosten (23) durch die einfachere Vorrichtung zur Vorspannung des Schiebers weg, so daß Aufbau der Cassette sowie deren Montage deutlich vereinfacht werden. Besonders wirksam werden die erfindungsgemäßen Verbesserungen im Zusammenhang mit der Kopplung der Betätigung der Frontklappe (11) mit dem Schieber (15), wie sie in der EP-A-272 537 der Anmelderin, beschrieben ist.

## Patentansprüche

1. Magnetbandcassette mit einem aus einer oberen und einer unteren Gehäusehälfte (1, 5) bestehenden Gehäuse, mit zwei in dem Gehäuse angeordneten zylindrischen Wickelnaben (6a, 6b) auf die ein im Gehäuse angeordnetes Magnetband (7) aufgewickelt ist mit Einführungsöffnungen (14) für die Wickelnabenwellen, welche in der unteren Gehäusehälfte (5) vorgesehen sind und in denen die Wickelnaben drehbar gelagert sind, wobei die Wickelnaben auf einer der Außenflächen einen Zahnkranz besitzen, mit einem eine Außenseite des Cassettengehäuses teilweise abdeckenden Schieber (15) mit Seitenwänden (16) der in Vorwärtsund Rückwärtsrichtung in Führungen der Cassettenseitenteile gegen die Kraft einer Feder, welche sich am Schieber sowie am Cassettengehäuse abstützt, frei gleitbar ist und der kreisförmige Ausnehmungen (17) besitzt, welche die Einführungsöffnungen (14) je nach Schieberstellung freigeben oder verschließen, dadurch gekennzeichnet, daß der Schieber (15) auf seiner der Außenseite des Cassettengehäuses zugekehrten Bodenplatte an seinem hinteren Teil mindestens zwei Sperrnasen (21) besitzt, welche in Führungsrillen (22) an der Cassettenaußenseite laufen und die so positioniert sind, daß sie in Schließstellung des Schiebers in die Zahnkränze der Wickelnaben (6a, 6b) eingreifen.

2. Magnetbandcassette nach Anspruch 1, dadurch gekennzeichnet, daß der Schieber (15) auf seiner der Außenseite des Cassettengehäuses zugekehrten Bodenplatte in der Mitte des vorderen Teils eine Nase (24) aufweist, welche in der nach vorne sowie nach unten offene Nut (25) an der Außenseite des Cassettenunterteils (5) läuft und wobei sich eine Schraubenfeder (20) in den durch die Nut (25), die Nase (24) und die Wand (26) des Cassettenunterteils gegebenen Raum abstützt.

3. Magnetbandcassette nach Anspruch 1, dadurch gekennzeichnet, daß das Cassettenunterteil (5) auf seiner Außenseite in der Mitte seines vorderen Teils einen Pfosten (30) aufweist, auf den der mittlere gewendelte Teil einer zweischenkeligen Feder (28) sitzt, deren beide Schenkel sich an Vorsprüngen (27, 27') abstützen, welche am vorderen Teil des Schiebers beiderseits der Mitte angespritzt sind.

## Claims

1. A magnetic tape cassette having a housing comprising an upper and a lower housing half (1, 5), having two cylindrical hubs (6a, 6b), which are arranged in the housing and on which there is wound up a magnetic tape (7), arranged in the housing, having insertion openings (14) for the hub spindles, which openings are provided in the lower housing half (5) and in which the hubs are rotatably mounted, the hubs being provided with a toothed rim on one of the outer faces, and having a slide (15), which partially covers an outer side of the cassette housing, has side walls (16), is able to slide freely in the forward direction and backward direction in guides of the cassette side parts against the force of a spring, which is supported on the slide and on the cassette housing, and is provided with circular clearances (17) which release or close the insertion openings (14), depending on the position of the slide, wherein the slide (15) is provided on its bottom plate facing the outer side of the cassette housing, on its rear part, with at least two locking lugs (21), which run in guide grooves (22) on the cassette outer side and are positioned in such a way that, in the closed position of the slide, they engage in the toothed rims of the hubs (6a, 6b).

2. The magnetic tape cassette as claimed in claim 1, wherein the slide (15) has on its bottom plate facing the outer side of the cassette housing, in the center of the front part, a lug (24) which runs in the forwardly and downwardly open groove (25) on the outer side of the lower cassette part (5) and a helical spring (20) being supported in the space defined by the groove (25), the lug (24) and the wall (26) of the lower cassette part.

3. The magnetic tape cassette as claimed in claim 1, wherein the lower cassette part (5) has on its outer side, in the center of its front part, a post (30), on which there is seated the central coiled part of a two-legged spring (28), the two legs of which are supported on projections (27, 27') which are moulded onto the front part of the slide on both sides of the center.

## Revendications

1. Cassette de bande magnétique comportant un boîtier constitué d'une moitié supérieure et d'une moitié inférieure (1, 5), deux moyeux cylindriques d'enroulement (6a, 6b) placés dans ce boîtier et sur lesquels est enroulée une bande magnétique (7) placée dans le boîtier, des ouvertures d'entrée (14) pour les axes des moyeux d'enroulement qui sont prévues dans la moitié inférieure (5) du boîtier et dans lesquelles les moyeux d'enroulement sont montés tournants, les moyeux d'enroulement ayant une couronne dentée sur une de leurs faces extérieures, un tiroir (15) à parois latérales (16) qui couvre partiellement une face extérieure du boîtier de la cassette, peut glisser librement en avant et en arrière dans des guidages des parties latérales de la cassette contre l'action d'un ressort qui s'appuie sur le tiroir et sur le boîtier de la cassette, et a des évidements circulaires (17) qui, suivant sa position, dégagent ou obturent les ouvertures d'entrée (14), caractérisée par le fait que le tiroir (15) a sur sa plaque de fond dirigée vers la face extérieure du boîtier de la cassette, sur sa partie arrière, au moins deux ergots d'arrêt (21) qui évoluent dans des rainures de guidage (22) faites sur la face extérieure de la cassette et sont placés de façon, lorsque le tiroir est en position fermée, à s'engager dans les couronnes dentées des moyeux d'enroulement (6a, 6b).

2. Cassette de bande magnétique selon la revendication 1, caractérisée par le fait que le tiroir (15) présente sur sa plaque de fond dirigée vers la face extérieure du boîtier de la cassette, au milieu de la partie avant, un ergot (24) qui évolue dans la rainure (25) ouverte vers l'avant et vers le bas faite sur la face extérieure de la partie inférieure (5) de la cassette, et un ressort hélicoïdal (20) s'appuie dans l'espace déterminé par la rainure (25), l'ergot (24) et la paroi (26) de la partie inférieure de la cassette.

3. Cassette de bande magnétique selon la revendication 1, caractérisée par le fait que la partie inférieure (5) de la cassette présente sur sa face extérieure, au milieu de sa partie avant, un pilier (30) sur lequel est montée la partie médiane en hélice d'un ressort à deux branches (28) dont les branches s'appuient sur des saillies (27, 27') qui sont venues d'injection sur la partie avant du tiroir de part et d'autre du milieu.
